# EUROPÄISCHE PATENTSCHRIFT

(11) **EP 4 115 097 B1**
(45) Veröffentlichungstag und Bekanntmachung des Hinweises auf die Patenterteilung: **23.07.2025**
(21) Anmeldenummer: 21710209.4
(22) Anmeldetag: 02.03.2021
(51) Int. Cl.: F16G 13/16

(54) **VERTIKAL-FÜHRUNGSRINNE**
VERTICAL GUIDE CHANNEL
CANAL DE GUIDAGE VERTICAL

(30) Priorität: 06.03.2020 DE 202020101247 U
(43) Veröffentlichungstag der Anmeldung: 11.01.2023
(73) Patentinhaber: Igus GmbH, 51147 Köln (DE)
(72) Erfinder: STRAUCH, Christian, 53604 Bad Honnef (DE); JAEKER, Thilo-Alexander, 53757 Sankt Augustin (DE)
(74) Vertreter: Lippert Stachow Patentanwälte Rechtsanwälte
(86) Internationale Anmeldenummer: PCT/EP2021/055144
(87) Internationale Veröffentlichungsnummer: WO 2021/175830

(56) Entgegenhaltungen:
- DE-A1- 10 253 267
- DE-U1- 20 101 656
- DE-U1- 20 305 618
- DE-U1- 202012 000 614

## Beschreibung

Die Erfindung betrifft eine Vorrichtung nach Art einer Führungsrinne zur Führung einer aus beweglich miteinander verbundenen Gliedern bestehenden Energieführungskette entlang einer vertikalen oder mit einer Vertikalkomponente verlaufenden Strecke, wobei die Energieführungskette zwei durch einen Umlenkbereich miteinander verbundene Trume aufweist und in der Energieführungskette flexible Versorgungsleitungen geführt sind, die einen in fester Höhe angeordneten Anschluss mit einem in der Höhe beweglichen Gerät oder einer Maschine verbinden, und wobei die Energieführungskette zwischen seitlichen Begrenzungswänden geführt ist, die durch separate Führungsplatten gebildet sind, die zueinander gegenüberliegend angeordnet sind und an ihren der Energieführungskette zugewandten Seiten glatte Gleitflächen aufweisen, wobei die Vorrichtung zwischen den beiden Gleitflächen einen Aufnahmeraum für die durch einen Umlenkbereich miteinander verbundenen Trume aufweist und die Führungsplatten in Konsolen gehaltert sind, die in Abständen höhenversetzt an einer Tragwand befestigt werden können, wobei die Konsolen U-förmig ausgebildet sind, wobei die Außenseite des U-Stegs der Konsole an der Tragwand anlegbar ist, und die Führungsplatten an den Innenseiten der U-Schenkel der Konsole befestigbar sind.

Es ist eine Führungsrinne für Energieführungsketten bekannt (EP 2546546 B1), die auch für den vertikalen Betrieb geeignet ist. Die Halterung der Energieführungskette innerhalb der Führungsrinne erfolgt magnetisch. Dazu sind die Kettenglieder an den Außenflächen ihrer Stege jeweils mit einem Permanentmagneten versehen, der mit einer in den Boden der Führungsrinne eingelassenen Stahlplatte wechselwirkt. Abgesehen davon, dass die Führungsrinne nur ein einzelnes Trum aufnehmen kann und sich nur für speziell angepasste Energieführungsketten eignet, ist eine solche Anordnung relativ aufwendig. Angaben, wie die Führungsrinne an vertikalen Wänden befestigt werden kann, sind in dieser Druckschrift nicht enthalten.

Eine andere bekannte Vorrichtung (US 5,178,247), die ausschließlich für einen horizontalen Betrieb vorgesehen ist, besteht im Wesentlichen aus einer U-förmigen Führungsrinne für Energieführungsketten, wobei die Seitenwände der Führungsrinne an ihrem unteren und oberen Ende um 90° nach innen abgewinkelte Vorsprünge aufweisen. Bei dieser aus Metallblech gebogenen Führungsrinne sind die Seitenwände über einen einstückig angeformten Boden miteinander verbunden. Die Rinne wird über Schrauben, die durch den Boden hindurchgreifen, auf einer gradflächigen, horizontalen Unterlage befestigt.

Ferner ist eine Führungsrinne für Energieführungsketten bekannt (DE 202011100313 U1), die ebenfalls für einen horizontalen Betrieb vorgesehen ist. Die Führungsrinne ist U-förmig ausgebildet und mit Hilfe von seitlichen Halterungen an einer glatten, vertikalen Wand befestigbar.

Die DE 203 05 618 U1 offenbart eine Führungsrinne zur Führung einer aus beweglich miteinander verbundenen Gliedern bestehenden Energieführungskette, die zwei durch einen Umlenkbereich miteinander verbundene Trume aufweist, wobei die Führungsrinne zur seitlichen Führung der Energieführungskette Begrenzungswände aufweist, die durch separate zueinander gegenüberliegend angeordnete Führungsplatten gebildet sind, wobei die Führungsplatten an ihren der Energieführungskette zugewandten Seiten glatte Gleitflächen aufweisen, zwischen denen ein Aufnahmeraum für die durch den Umlenkbereich miteinander verbundenen Trume angeordnet ist. Die Fußteile der Führungsplatten weisen an die glatten Gleitflächen anschließende nach innen gerichtete Flansche auf, auf denen das Untertrum der Energieführungskette ablegbar ist. Die Führungsplatten sind in Konsolen gehaltert, die in Abständen höhenversetzt an einer Tragwand befestigbar sind und die U-förmig ausgebildet sind, wobei die Außenseite des U-Stegs der Konsole an der Tragwand anlegbar ist. Die Führungsplatten sind an den Innenseiten der U-Schenkel der Konsole befestigbar.

Aus der DE 2001 01 656 U1 ist ebenfalls eine Führungsrinne der vorstehend beschriebenen Art bekannt. Die Führungsrinne umfasst seitliche Begrenzungswände, zwischen denen die Energieführungskette geführt werden kann und die durch separate, zueinander gegenüberliegend angeordnete Führungsplatten gebildet sind, wobei die Führungsplatten an ihren der Energieführungskette zugewandten Seiten glatte Gleitflächen aufweisen. Die Gleitflächen sind in ihren bodenseitigen Randbereichen mit einem rechtwinklig vorspringenden Führungsflansch versehen, auf dem die Energieführungskette ablegbar ist.

Die DE 102 53 267 A1 offenbart eine Führungsrinne zur Führung einer Energieführungskette, wobei die Führungsrinne seitliche Begrenzungswände der vorstehend beschriebenen Art aufweist. Die an den der Energieführungskette zugewandten Seiten der Begrenzungswände angeordneten glatten Gleitflächen sind im bodenseitigen Bereich der Begrenzungswände mit rechtwinklig vorspringenden Wandabschnitten der Begrenzungswände versehen, auf denen das Untertrum einer Energieführungskette ablegbar ist. Ein Abschnitt der Führungsrinne kann ein Auflageprofil aufweisen, auf dem das Obertrum einer Energieführungskette ablegbar ist. In diesem Abschnitt kann die Führungsrinne eine L-förmige Abhebesicherung aufweisen, die mit einem rinneneinwärts gerichteten Schenkel versehen ist, der im Falle eines Abhebens des Obertrums vom Auflageprofil die Abhebebewegung des Obertrums begrenzt. Die Abhebesicherung mit dem rechtwinklig vorspringenden Schenkel ist derart angeordnet, dass sie mit einem vertikalen Abstand über die betreffende Begrenzungswand greift. Die Begrenzungswände sind in U-förmig ausgebildeten Konsolen gehaltert, die in Abständen höhenversetzt an einer Tragwand befestigbar sind, wobei die Außenseite des U-Stegs der Konsole an der Tragwand anlegbar ist.

Die DE 20 2012 000 614 U1 offenbart eine Führungseinrichtung für eine Energieführungskette, die zwei seitlich gegenüberliegende im Querschnitt rechtwinklige Führungsschienen mit jeweils einem horizontalen und vertikalen Schenkel aufweist. Der vertikale Schenkel dient als Begrenzungswand mit glatten Gleitflächen zur Führung des Untertrums einer Energieführungskette, während der horizontale Schenkel zur Auflage des Untertrums dient. Die Führungsschienen werden von U-förmig ausgebildeten Konsolen aus seitlichen Flanschen und daran rechtwinklig angeformten Stegen gehalten. Für die Anbringung der Führungsschienen sind die U-förmigen Konsolen unten an den einander zugekehrten Flächen der Flansche und an den jeweils angrenzenden Bereichen des Steges mit einem Sitz für die Führungsschienen 24 versehen.

Der Erfindung liegt die Aufgabe zugrunde, eine mit geringem Aufwand herstellbare vertikale Führung für an sich bekannte Energieführungsketten bereitzustellen, die sich bequem an einer vertikalen Wand befestigen lässt und eine sichere Halterung der Energieführungskette gewährleistet.

Erfindungsgemäß wird diese Aufgabe durch den Anspruch 1 gelöst, wobei die Merkmale der Erfindung insbesondere darin zu sehen sind, dass die Gleitflächen in ihren beiden seitlichen Randbereichen jeweils mit einem rechtwinklig vorspringenden Führungsflansch versehen sind, wobei die Führungsflansche den Aufnahmeraum für die durch einen Umlenkbereich miteinander verbundenen Trume an beiden seitlichen Randbereichen begrenzen.

Durch die Erfindung wird ein völlig neues Führungssystem geschaffen, welches keine ausgebildete Führungsrinne im herkömmlichen Sinn benötigt. Es sind lediglich langgestreckte, separate Führungsplatten als seitliche Begrenzungswände vorgesehen, die an ihren der Energieführungskette zugewandten Seiten glatte Gleitflächen aufweisen. Um die Energieführungskette zwischen den Führungsplatten zu haltern, weisen diese in ihren Randbereichen rechtwinklig vorspringende Führungsflansche auf. Zusammen mit den in Abständen höhenversetzt angeordneten Konsolen werden die Führungsplatten in ihrer Position gehalten, sodass eine gute Führungsbahn für eine Energieführungskette zwischen den Führungsplatten gewährleistet ist.

Die erfindungsgemäße Vorrichtung nimmt zwei durch einen Umlenkbereich miteinander verbundene Trume einer Energieführungskette auf, wobei die an den seitlichen Randbereichen der Gleitflächen verlaufenden Führungsflansche den Raum begrenzen, in dem sich die beiden Trume der Energieführungskette bewegen. Dadurch ergibt sich eine sehr kompakte Konstruktion, die nur einen sehr geringen Platzbedarf benötigt.

An den den U-Schenkeln der Konsolen zugewandten Rückseiten der Führungsplatten und an den Innenseiten der U-Schenkel sind vorzugsweise Rastmittel vorgesehen, die ineinander einrastbar sind und damit über die gesamte Länge der Führungsrinne einen festen Halt bieten.

Die an den Rückseiten der Führungsplatten vorgesehenen Rastmittel sind zweckmäßig paarweise vorgesehene Vorsprünge mit hinterschnittenen Nasen, wobei die Nasen eines Paars von Vorsprüngen in entgegengesetzte Richtungen weisen. Entsprechend sind an den U-Schenkeln der Konsolen paarweise ausgebildete Gegenvorsprünge mit hinterschnittenen Nasen ausgebildet, die ebenfalls in entgegengesetzte Richtungen weisen, wobei beim Andrücken der Führungsplatten an die Innenseiten der U-Schenkel, die an den Vorsprüngen und Gegenvorsprüngen ausgebildeten Nasen durch leichte elastische Verformung der Vorsprünge und Gegenvorsprünge hintereinander einschnappen. Dadurch wird ein guter Sitz ermöglicht, der auch größeren Erschütterungen standhält.

Um über die Breite der Führungsplatten einen ausreichend zuverlässigen Halt zu erzielen, können an den Rückseiten der Führungsplatten und an den Innenseiten der U-Schenkel jeweils zwei Paare von Vorsprüngen und Gegenvorsprüngen angeordnet sein.

Die Vorsprünge und Gegenvorsprünge sind zweckmäßig als durchgehende Rippen ausgebildet und auch die an den Rippen vorgesehenen hinterschnittenen Nasen erstrecken sich durchgängig über die gesamte Länge der Rippen.

Die als Rippen ausgebildeten Vorsprünge und Gegenvorsprünge verlaufen vorzugsweise in vertikaler Richtung. Dadurch wird ein optimaler und stabiler Halt erzielt.

Die an den Rückseiten der Führungsplatten als Rippen ausgebildeten Vorsprünge erstrecken sich zweckmäßig über die gesamte Länge der Führungsplatten. Dadurch erhalten die Führungsplatten eine zusätzliche Versteifung, sodass die Führungsplatten auch in den freien Bereichen zwischen zwei Konsolen, in denen keine Abstützung vorhanden ist, eine ausreichende Stabilität erhalten.

An denjenigen Seiten der an der Konsole vorgesehenen rippenförmigen Gegenvorsprünge, die im eingerasteten Zustand an den rippenförmigen Vorsprüngen der Führungsplatten anliegen, können Noppen vorgesehen sein, die über das Niveau der rippenförmigen Vorsprünge hinaus vorstehen. Dadurch wird ein besserer Halt der ineinander geschnappten Vorsprünge und Gegenvorsprünge gewährleistet und eine zuverlässige Sicherung gegen ein Verschieben der Teile relativ zueinander geschaffen.

Zur genauen Positionierung der Führungsplatten sind an den Konsolen mindestens zwei Anschläge vorgesehen, sodass eine optimale Maßhaltigkeit zur Aufnahme der Trume zwischen den Führungsplatten gewährleistet ist.

Die Anschläge sind dabei so ausgebildet, dass der innere Anschlag als durchgehende Anschlagleiste an der Innenseite des U-Stegs und der äußere Anschlag als nach innen umgebogene Spitze des jeweiligen U-Schenkels der Konsole ausgebildet ist.

Die Konsolen können als einstückige Kunststoffteile ausgebildet sein. Vorzugsweise wird dabei zur Herstellung der Konsolen PVC oder PE verwendet.

Auch die Führungsplatten können als einstückige Teile aus PVC oder PE bestehen, wobei es selbstverständlich auch möglich erscheint, die Führungsplatten aus Metall herzustellen.

Die Führungsplatten und die Konsolen können extrudiert oder auch spritzgegossen werden.

Der Steg und die beiden U-Schenkel der Konsole bestehen vorzugsweise aus zwei im Abstand voneinander verlaufenden Platten, die durch fachwerkartig angeordnete Rippen miteinander verbunden sind. Dadurch ist bei der Herstellung der Konsolen eine erhebliche Materialersparnis möglich, ohne dass die Stabilität der Konsolen negativ beeinträchtigt wird.

An beiden Seiten des U-Stegs der Konsole können vorspringende Befestigungsflansche vorgesehen sein, über die die jeweilige Konsole mit Hilfe von Befestigungselementen mit der Tragwand verbindbar ist.

Ferner können an der Außenseite der U-Schenkel der Konsolen Halterungen für stationär zu verlegende Leitungen angeordnet sein.

Die Erfindung ist in der Zeichnung beispielhaft veranschaulicht und im Nachstehenden im Einzelnen anhand der Zeichnung beschrieben.

Es zeigen:
- FIG.1: eine Ansicht eines Ausführungsbeispiels der erfindungsgemäßen Vertikal-Führungsrinne,
- FIG.2: eine Seitenansicht der Führungsrinne gemäß FIG.1,
- FIG.3: in stark vergrößertem Maßstab den Ausschnitt III aus FIG.1,
- FIG.4: den Ausschnitt gemäß FIG. 3 in perspektivischer Darstellung,
- FIG.5: eine Ansicht der Konsole von oben mit den eingesetzten Führungsplatten und
- FIG.6: in noch weiter vergrößertem Maßstab einen Teilschnitt entlang der Linie VI aus FIG.5.

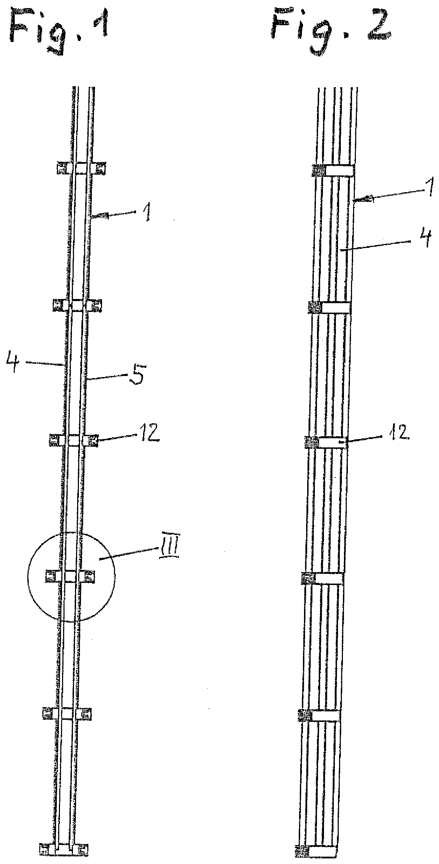

In FIG. 1 und 2 der Zeichnung ist eine Führungsrinne 1 zur vertikalen Führung von Energieführungsketten dargestellt. Eine solche Führungsrinne 1 kann auch vorteilhaft eingesetzt werden, wenn die Führung über eine Strecke erfolgen soll, die lediglich eine Vertikalkomponente aufweist, also über eine Schräge verläuft. Im vorliegenden Fall dient die Energieführungskette zur Führung flexibler Versorgungsleitungen, die einen in fester Höhe angeordneten Anschluss mit einem in der Höhe beweglichen Gerät oder einer Maschine verbinden.

Die Energieführungskette wird dabei zwischen seitlichen Begrenzungswänden geführt, die bei der erfindungsgemäßen Vorrichtung durch separate Führungsplatten 4 und 5 gebildet sind. Die Führungsplatten 4 und 5 werden dabei in Konsolen 12 gehaltert, die im Folgenden noch im Einzelnen beschrieben werden.

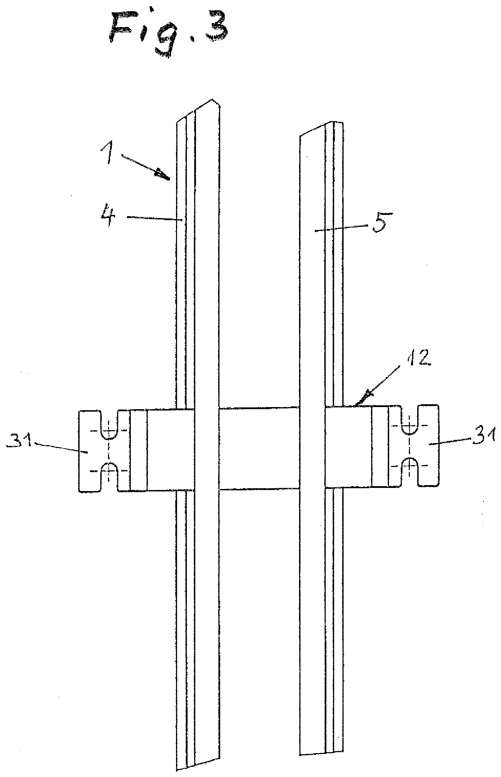

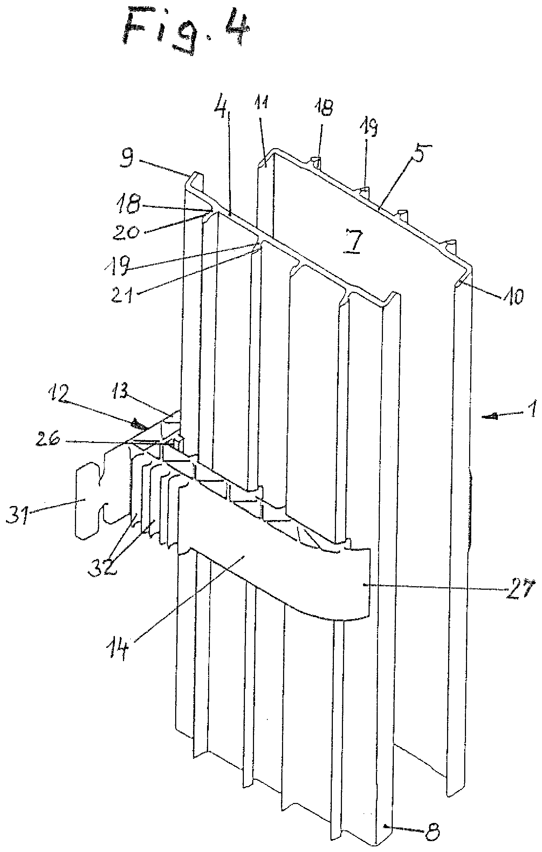

Der in FIG.1 gekennzeichnete Ausschnitt III ist in den FIG. 3,4 und 5 in vergrößertem Maßstab im Einzelnen dargestellt.

Wie aus diesen Figuren hervorgeht, weisen die beiden einander gegenüberliegend angeordneten Führungsplatten 4 und 5 an ihren dem Aufnahmeraum für die Energieführungskette zugewandten Seiten glatte Gleitflächen 6 und 7 auf, die in ihren seitlichen Randbereichen mit rechtwinklig vorspringenden Führungsflanschen versehen sind, wobei die Führungsplatte 4 Führungsflansche 8 und 9 und die Führungsplatte 5 Führungsflansche 10 und 11 aufweist.

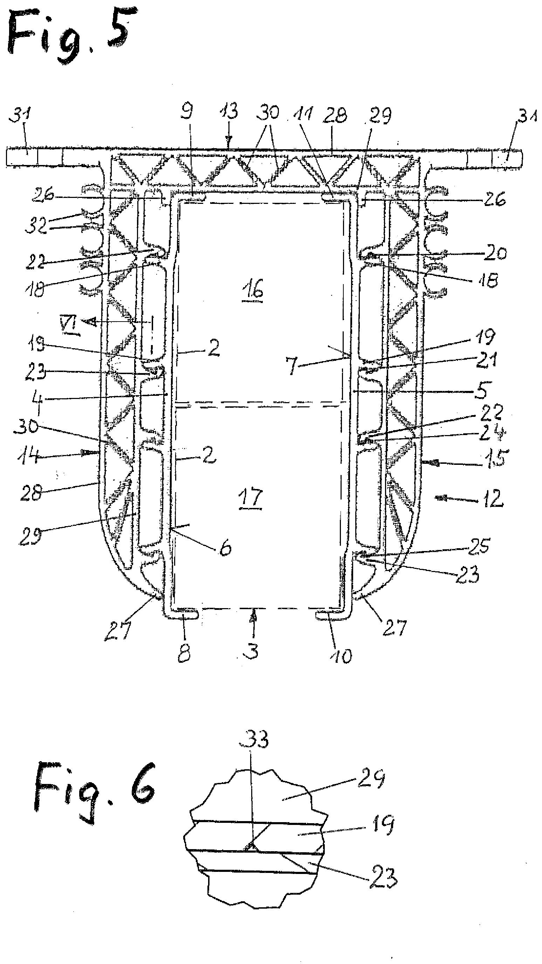

Wie insbesondere aus FIG. 5 zu entnehmen ist, dient der Raum zwischen den beiden Gleitflächen 6 und 7 der Führungsplatten 4 und 5 als Aufnahmeraum von zwei durch einen Umlenkbereich miteinander verbundenen Trume 16 und 17 der Energieführungskette 3, die jeweils aus beweglich miteinander verbundenen Gliedern 2 besteht.

Die beiden Führungsplatten 4 und 5 werden ausschließlich durch die in der Höhe versetzt angeordneten Konsolen 12 gehalten und in ihrer Position fixiert.

Die Konsolen 12 sind U-förmig ausgebildet, wobei die Außenseite des U-Stegs 13 an einer glatten Tragwand befestigt werden kann. Die Führungsplatten 4 und 5 sind jeweils an den Innenseiten der U-Schenkel 14 und 15 der jeweiligen Konsole 12 befestigt.

An den den U-Schenkeln 14 und 15 der Konsolen 12 zugewandten Rückseiten der Führungsplatten 4 und 5 und an den Innenseiten der U-Schenkel 14 und 15 sind Rastmittel vorgesehen, die fest ineinander einrastbar sind.

Die an den Rückseiten der Führungsplatten 4 und 5 vorgesehenen Rastmittel bestehen jeweils aus zwei Paaren von Vorsprüngen 18 und 19, die mit hinterschnittenen Nasen 20 und 21 versehen sind. Die hinterschnittenen Nasen 20 und 21 eines Paars von Vorsprüngen 18 und 19 weisen in entgegengesetzte Richtungen, und zwar voneinander weg.

An den U-Schenkeln 14 und 15 der Konsolen 12 sind entsprechende paarweise ausgebildete Gegenvorsprünge 22 und 23 mit hinterschnittenen Nasen 24 und 25 ausgebildet, wobei die Nasen jedes Paars von Vorsprüngen in entgegengesetzte Richtungen weisen, und zwar im vorliegenden Fall aufeinander zu.

Beim Andrücken der Führungsplatten 4 und 5 an die jeweiligen Innenseiten der U-Schenkel 14 und 15 schnappen die an den Vorsprüngen 18 und 19 und Gegenvorsprüngen 22 und 23 ausgebildeten Nasen 20, 21, 24 und 25 durch leichte elastische Verformung der Vorsprünge und Gegenvorsprünge hintereinander ein. Dabei greifen die jeweiligen Paare von Vorsprüngen 18 und 19 der Führungsplatten 5 und 6 zwischen die Paare von Vorsprüngen 22 und 23 der U-Schenkel 14 und 15 der Konsolen 12, so dass die in entgegengesetzte Richtungen weisenden Nasen der Vorsprünge hintereinander einrasten.

Wie insbesondere aus FIG.5 hervorgeht, sind an den Führungsplatten 4 und 5 jeweils zwei Paare von Vorsprüngen 18 und 19 angeordnet, die mit jeweils zwei Paaren von an den U-Schenkeln 14 und 15 der Konsolen 12 angeordneten Gegenvorsprüngen 22 und 23 zusammenwirken.

Die Vorsprünge 18 und 19 und Gegenvorsprünge 22 und 23 sind als durchgehende Rippen ausgebildet, wobei auch die an den Rippen ausgebildeten hinterschnittenen Nasen 20,21 und 24,25 durchgängig verlaufen. Dabei sind die als Rippen ausgebildeten Vorsprünge 18 und 19 und Gegenvorsprünge 22 und 23 in vertikaler Richtung angeordnet.

Die an den Rückseiten der Führungsplatten 4 und 5 als Rippen ausgebildeten Vorsprünge 18 und 19 erstrecken sich über die gesamte Länge der Führungsplatten 4 und 5 und verleihen diesen dadurch eine besonders gute Steifigkeit, so dass die Führungsplatten 4 und 5 auch in den Bereichen zwischen zwei Konsolen 12 mit einer ausreichenden Steifigkeit ausgestattet sind und die beiden Trume der Energieführungskette zuverlässig führen.

Wie in Fig. 6 dargestellt, sind an denjenigen Seiten der an der Konsole 12 vorgesehenen rippenförmigen Gegenvorsprünge 22 und 23, die im eingerasteten Zustand an den rippenförmigen Vorsprüngen 18 und 19 der Führungsplatten 4 und 5 anliegen, einzelne vorspringende Noppen 33 ausgebildet, die den Gleitwiderstand zwischen den Vorsprüngen 18 und 19 und Gegenvorsprüngen 22 und 23 erhöhen und damit die Gesamtstabilität der Führungsrinne verbessern.

Zur genauen Positionierung der Führungsplatten 4 und 5 zwischen den U-Schenkeln 14 und 15 der Konsolen 12 sind jeweils zwei Anschläge 26 und 27 an den Konsolen 12 vorgesehen. Der innere Anschlag 26 ist dabei als durchgehende Anschlagleiste an der Innenseite des U-Stegs 13 und der äußere Anschlag 27 als nach innen gebogene Spitze des jeweiligen U-Schenkels 14 bzw. 15 der Konsole 12 ausgebildet. Durch diese Maßnahme wird ein genauer Abstand zwischen den Gleitflächen 6 und 7 der Führungsplatten eingestellt.

Die Konsolen 12 sind als einstückige Kunststoffteile aus PVC oder PE ausgebildet. Das Gleiche gilt auch für die Führungsplatten 4 und 5. Sowohl die Führungsplatten 4 und 5 als auch die Konsolen 12 werden extrudiert oder spritzgegossen, wobei sich zumindest für die langgestreckten Führungsplatten 4 und 5 das Extrusionsverfahren vorteilhaft anbietet.

Die Konsolen 12 sind in extremer Leichtbauweise konstruiert, und zwar bestehen der jeweilige U-Steg 13 und die beiden U-Schenkel 14 und 15 jeweils aus zwei im Abstand voneinander verlaufenden Platten 28 und 29, die durch fachwerkartig angeordnete Rippen 30 miteinander verbunden sind.

Zur Befestigung der Konsolen 12 an beispielsweise einer glatten Tragwand sind an beiden Seiten des U-Stegs 13 vorspringende Befestigungsflansche 31 vorgesehen. Die Flansche sind dabei mit Aussparungen oder Bohrungen versehen, durch die Befestigungselemente, beispielsweise Schrauben, hindurchgeführt werden können.

Bei dem in der Zeichnung dargestellten Ausführungsbeispiel sind an den Außenseiten der U-Schenkel der Konsolen zusätzliche Halterungen 32 vorgesehen, an denen stationär zu verlegenden Leitungen befestigt werden können.

Die erfindungsgemäße Vertikal-Führungsrinne weist gegenüber dem Stand der Technik diverse Vorteile auf. Sie besteht aus wenigen Einzelteilen, die vorzugsweise aus Kunststoff preiswert hergestellt werden können. Durch die geschickte Architektur der Konsolen und Führungsplatten wird trotz eines geringen Materialaufwandes eine bemerkenswerte Steifigkeit der Gesamtvorrichtung erzielt, so dass ein zuverlässiger Betrieb gewährleistet ist.

### Bezugszeichenliste

- 1: Führungsrinne
- 2: Glieder
- 3: Energieführungskette
- 4: Führungsplatte
- 5: Führungsplatte
- 6: Gleitfläche
- 7: Gleitfläche
- 8: Führungsflansch
- 9: Führungsflansch
- 10: Führungsflansch
- 11: Führungsflansch
- 12: Konsole
- 13: U-Steg
- 14: U-Schenkel
- 15: U-Schenkel
- 16: Trum
- 17: Trum
- 18: Vorsprünge
- 19: Vorsprünge
- 20: hinterschnittene Nase
- 21: hinterschnittene Nase
- 22: Gegenvorsprung
- 23: Gegenvorsprung
- 24: hinterschnittene Nase
- 25: hinterschnittene Nase
- 26: Anschlag
- 27: Anschlag
- 28: Platten
- 29: Platten
- 30: Rippen
- 31: Befestigungsflansche
- 32: Halterungen
- 33: Noppen

## Patentansprüche

1. Vorrichtung nach Art einer Führungsrinne (1) zur Führung einer aus beweglich miteinander verbundenen Gliedern (2) bestehenden Energieführungskette (3) entlang einer vertikalen oder mit einer Vertikalkomponente verlaufenden Strecke, wobei die Energieführungskette zwei durch einen Umlenkbereich miteinander verbundene Trume (16, 17) aufweist und in der Energieführungskette (3) flexible Versorgungsleitungen geführt sind, die einen in fester Höhe angeordneten Anschluss mit einem in der Höhe beweglichen Gerät oder einer Maschine verbinden und wobei die Vorrichtung seitliche Begrenzungswände umfasst, zwischen denen die Energieversorgungskette (3) geführt ist, die durch separate Führungsplatten (4,5) gebildet sind, die zueinander gegenüberliegend angeordnet sind und an ihren der Energieführungskette (3) zugewandten Seiten glatte Gleitflächen (6,7) aufweisen, wobei die Vorrichtung zwischen den beiden Gleitflächen (6, 7) einen Aufnahmeraum für die durch einen Umlenkbereich miteinander verbundenen Trume (16, 17) aufweist und die Führungsplatten (4,5) in Konsolen (12) gehaltert sind, die in Abständen höhenversetzt an einer Tragwand befestigt werden können, wobei die Konsolen (12) U-förmig ausgebildet sind, wobei die Außenseite des U-Stegs (13) der Konsole (12) an der Tragwand anlegbar ist, und die Führungsplatten (4,5) an den Innenseiten der U-Schenkel (14,15) der Konsole (12) befestigbar sind, **dadurch gekennzeichnet, dass** die Gleitflächen (6,7) in ihren beiden seitlichen Randbereichen jeweils mit einem rechtwinklig vorspringenden Führungsflansch (8,9, 10,11) versehen sind, wobei die Führungsflansche (8, 9) den Aufnahmeraum für die durch einen Umlenkbereich miteinander verbundenen Trume (16, 17) an beiden seitlichen Randbereichen begrenzen.

2. Vorrichtung nach Anspruch 1, **dadurch gekennzeichnet,**
- **dass** an den den U-Schenkeln (14,15) der Konsolen (12) zugewandten Rückseiten der Führungsplatten (4,5) und an den Innenseiten der U-Schenkel (14,15) Rastmittel vorgesehen sind, die ineinander einrastbar sind.

3. Vorrichtung nach Anspruch 2, **dadurch gekennzeichnet,**
- **dass** die an den Rückseiten der Führungsplatten (4,5) vorgesehenen Rastmittel paarweise vorgesehene Vorsprünge (18,19) mit hinterschnittenen Nasen (20,21) sind,
- **dass** die Nasen (20,21) eines Paars von Vorsprüngen (18,19) in entgegengesetzte Richtungen weisen,
- **dass** an den U-Schenkeln (14,15) entsprechende paarweise ausgebildete Gegenvorsprünge (22,23) mit hinterschnittenen Nasen (24,25) ausgebildet sind, die ebenfalls in entgegengesetzte Richtungen weisen, und
- **dass** beim Andrücken der Führungsplatten (4,5) an die Innenseiten der U-Schenkel (14,15) die an den Vorsprüngen (18,19) und Gegenvorsprüngen (22,23) ausgebildeten Nasen (20, 21, 24, 25) durch leichte elastische Verformung der Vorsprünge und Gegenvorsprünge hintereinander einschnappen.

4. Vorrichtung nach Anspruch 3, **dadurch gekennzeichnet, dass** an den Rückseiten der Führungsplatten (4,5) und den Innenseiten der U-Schenkel (14,15) jeweils zwei Paare von Vorsprüngen (18,19) und Gegenvorsprüngen (22,23) angeordnet sind.

5. Vorrichtung nach Anspruch 3 oder 4, **dadurch gekennzeichnet,**
- **dass** die Vorsprünge (18,19) und Gegenvorsprünge (22,23) als durchgehende Rippen ausgebildet sind und
- **dass** die an den Rippen ausgebildeten hinterschnittenen Nasen (20,21,24,25) ebenfalls durchgängig verlaufen.

6. Vorrichtung nach Anspruch 5, **dadurch gekennzeichnet, dass** die als Rippen ausgebildeten Vorsprünge (18, 19) und Gegenvorsprünge (22, 23) in vertikaler Richtung verlaufen.

7. Vorrichtung nach Anspruch 6, **dadurch gekennzeichnet, dass** die an den Rückseiten der Führungsplatten (4, 5) als Rippen ausgebildeten Vorsprünge (18, 19) sich über die gesamte Länge der Führungsplatten (4,5) erstrecken.

8. Vorrichtung nach Anspruch 6 oder 7, **dadurch gekennzeichnet, dass** an denjenigen Seiten der an den Konsolen (12) vorgesehenen rippenförmigen Gegenvorsprünge (22, 23), die im eingerasteten Zustand an den rippenförmigen Vorsprüngen (18, 19) der Führungsplatten (4,5) anliegen, Noppen ausgebildet sind.

9. Vorrichtung nach einem der Ansprüche 1 - 8, **dadurch gekennzeichnet, dass** die Konsolen (12) als einstückige Kunststoffteile ausgebildet sind.

10. Vorrichtung nach Anspruch 9, **dadurch gekennzeichnet, dass** die Konsolen (12) aus PVC oder PE bestehen.

11. Vorrichtung nach einem der Ansprüche 1 - 10, **dadurch gekennzeichnet, dass** die Führungsplatten (4,5) ebenfalls als einstückige Teile aus PVC oder PE bestehen.

12. Vorrichtung nach einem der Ansprüche 1 - 11, **dadurch gekennzeichnet, dass** die Führungsplatten (4,5) und die Konsolen (12) extrudiert oder spritzgegossen werden.

13. Vorrichtung nach einem der Ansprüche 1 - 12, **dadurch gekennzeichnet,**
**dass** der U-Steg (13) und die beiden U-Schenkel (14,15) der Konsole (12) jeweils aus zwei im Abstand voneinander verlaufenden Platten (28,29) bestehen, die durch fachwerkartig angeordnete Rippen (30) miteinander verbunden sind.

14. Vorrichtung nach einem der Ansprüche 1-13, **dadurch gekennzeichnet,**
**dass** an beiden Seiten des U-Stegs (13) der Konsole (12) vorspringende Befestigungsflansche (31) vorgesehen sind, über die die jeweilige Konsole (12) mit Hilfe von Befestigungselementen mit der Tragwand verbindbar ist.

15. Vorrichtung nach einem der Ansprüche 1 - 14, **dadurch gekennzeichnet, dass** an der Außenseite der U-Schenkel (14, 15) der Konsolen (12) Halterungen (32) für stationär zu verlegende Leitungen angeordnet sind.

## Claims

1. Guide channel-type device (1) for guiding an energy chain (3), consisting of links (2) that are movably connected to one another, along a vertical line or a line running with a vertical component, wherein the energy chain has two strands (16, 17) connected to one another by a deflection region, and flexible supply lines which connect a connector arranged at a fixed height to a vertically movable device or a machine are guided in the energy chain (3), and wherein the device comprises lateral delimiting walls, between which the energy chain (3) is guided and which are formed by separate guide plates (4,5), which are arranged opposite one another and have smooth sliding surfaces (6,7) on their sides facing the energy chain (3), wherein the device has, between the two sliding surfaces (6, 7), a receiving space for the strands (16, 17) connected to one another by a deflection region, and the guide plates (4,5) are retained in brackets (12), which can be fastened at intervals, with a height offset, to a supporting wall, wherein the brackets (12) are formed U-shaped, wherein the exterior side of the U web (13) of the bracket (12) can be caused to rest against the supporting wall, and the guide plates (4,5) can be fastened to the interior sides of the U legs (14,15) of the bracket (12), **characterized in that** the sliding surfaces (6,7) are provided with a guide flange (8,9, 10,11) protruding at a right angle in each of their two lateral edge regions, wherein the guide flanges (8, 9) delimit, at both lateral edge regions, the receiving space for the strands (16, 17) connected to one another by a deflection region.

2. Device according to claim 1, **characterized in that**
- catch means, which can engage in one another, are provided on the rear sides of the guide plates (4,5) facing the U legs (14,15) of the brackets (12) and on the interior sides of the U legs (14,15).

3. Device according to claim 2, **characterized in that**
- the catch means provided on the rear sides of the guide plates (4,5) are protrusions (18,19), provided in pairs, with undercut lugs (20,21),
- the lugs (20,21) of a pair of protrusions (18,19) point in opposing directions,
- corresponding counter-protrusions (22,23), formed in pairs, with undercut lugs (24,25) which likewise point in opposing directions, are formed on the U legs (14,15), and
- when the guide plates (4,5) are pressed against the interior sides of the U legs (14,15), the lugs (20, 21, 24, 25) formed on the protrusions (18,19) and counter-protrusions (22,23) snap in behind one another through slight elastic deformation of the protrusions and counter-protrusions.

4. Device according to claim 3, **characterized in that** in each case two pairs of protrusions (18,19) and counter-protrusions (22,23) are arranged on the rear sides of the guide plates (4,5) and the interior sides of the U legs (14,15).

5. Device according to claim 3 or 4, **characterized in that**
- the protrusions (18,19) and counter-protrusions (22,23) are formed as continuous ribs and
- the undercut lugs (20,21,24,25) formed on the ribs likewise run continuously.

6. Device according to claim 5, **characterized in that** the protrusions (18, 19) and counter-protrusions (22, 23) formed as ribs run in the vertical direction.

7. Device according to claim 6, **characterized in that** the protrusions (18, 19) formed as ribs on the rear sides of the guide plates (4, 5) extend over the entire length of the guide plates (4,5).

8. Device according to claim 6 or 7, **characterized in that** nubs are formed on the sides of the rib-shaped counter-protrusions (22, 23) provided on the brackets (12) which rest against the rib-shaped protrusions (18, 19) of the guide plates (4,5) in the engaged state.

9. Device according to one of claims 1 - 8, **characterized in that** the brackets (12) are formed as one-piece plastic parts.

10. Device according to claim 9, **characterized in that** the brackets (12) consist of PVC or PE.

11. Device according to one of claims 1 - 10, **characterized in that** the guide plates (4,5), as one-piece parts, likewise consist of PVC or PE.

12. Device according to one of claims 1 - 11, **characterized in that** the guide plates (4,5) and the brackets (12) are extruded or injection moulded.

13. Device according to one of claims 1 - 12, **characterized in that**
the U web (13) and the two U legs (14,15) of the bracket (12) in each case consist of two plates (28,29) running at a distance from one another, which are connected to one another by ribs (30) arranged truss-like.

14. Device according to one of claims 1-13, **characterized in that**
protruding fastening flanges (31), via which the respective bracket (12) can be connected to the supporting wall with the aid of fastening elements, are provided on both sides of the U web (13) of the bracket (12).

15. Device according to one of claims 1 - 14, **characterized in that** retainers (32) for lines to be laid in a fixed manner are arranged on the exterior side of the U legs (14, 15) of the brackets (12).

## Revendications

1. Dispositif du type rainure de guidage (1) pour le guidage d'une chaîne porte-câbles (3) constituée de maillons (2) reliés entre eux de manière mobile le long d'un trajet vertical ou un d'un trajet s'étendant avec une composante verticale, la chaîne porte-câbles comportant deux brins (16, 17) reliés entre eux par une zone de renvoi et des conduites d'alimentation flexibles étant guidées dans la chaîne porte-câbles (3) qui relient un raccordement disposé à hauteur fixe à un appareil ou à une machine mobile en hauteur, et dans lequel le dispositif comprend des parois de limitation latérales entre lesquelles est guidée la chaîne porte-câbles (3), qui sont formées par des plaques de guidage (4, 5) séparées, disposées en vis-à-vis l'une de l'autre et présentant, sur leurs côtés tournés vers la chaîne porte-câbles (3), des surfaces de glissement lisses (6, 7), le dispositif présentant entre les deux surfaces de glissement (6, 7) un espace de réception pour les brins (16, 17) reliés entre eux par une zone de renvoi, et les plaques de guidage (4, 5) étant maintenues dans des consoles (12) qui peuvent être fixées à distance les unes des autres et de manière décalée en hauteur sur une paroi porteuse, les consoles (12) étant en forme de U, le côté extérieur de la traverse en U (13) de la console (12) pouvant être appliqué contre la paroi porteuse, et les plaques de guidage (4, 5) pouvant être fixées sur les côtés intérieurs des branches en U (14, 15) de la console (12), **caractérisé en ce que** les surfaces de glissement (6, 7) sont pourvues dans leurs deux zones marginales latérales chacune d'une bride de guidage (8, 9, 10, 11) saillant à angle droit, les brides de guidage (8, 9) délimitant dans les deux zones marginales latérales l'espace de réception pour les brins (16, 17) reliés l'un avec l'autre par une zone de renvoi.

2. Dispositif selon la revendication 1, **caractérisé en ce que**
- des moyens d'encliquetage pouvant s'encliqueter les uns dans les autres sont prévus sur les faces arrière des plaques de guidage (4, 5) tournées vers les branches en U (14, 15) des consoles (12) et sur les faces intérieures des branches en U (14, 15).

3. Dispositif selon la revendication 2, **caractérisé en ce**
- **que** les moyens d'encliquetage prévus sur les faces arrière des plaques de guidage (4, 5) sont des saillies (18, 19) prévues par paires avec des ergots (20, 21) en contre-dépouille,
- **que** les ergots (20, 21) d'une paire de saillies (18, 19) sont orientés dans des directions opposées,
- **que** des contre-saillies (22, 23) formées par paires correspondantes sont prévues sur les branches en U (14, 15) avec des ergots en contre-dépouille (24, 25) qui sont également orientés dans des directions opposées, et
- **que**, lorsque les plaques de guidage (4, 5) sont pressées contre les faces intérieures des branches en U (14, 15), les ergots (20, 21, 24, 25) formés sur les saillies (18, 19) et les contre-saillies (22, 23) s'enclenchent les uns derrière les autres par une légère déformation élastique des saillies et des contre-saillies.

4. Dispositif selon la revendication 3, **caractérisé en ce que** deux paires de saillies (18, 19) et de contre-saillies (22, 23) sont disposées sur les faces arrière des plaques de guidage (4, 5) et sur les faces intérieures des branches en U (14, 15).

5. Dispositif selon la revendication 3 ou 4, **caractérisé en ce que**
- les saillies (18, 19) et les contre-saillies (22, 23) sont conçues comme des nervures continues et
- que les ergots en contre-dépouille (20, 21, 24, 25) formés sur les nervures s'étendent également de manière continue.

6. Dispositif selon la revendication 5, **caractérisé en ce que** les saillies (18, 19) et les contre-saillies (22, 23) formées en tant que nervures s'étendent dans le sens vertical.

7. Dispositif selon la revendication 6, **caractérisé en ce que** les saillies (18, 19) formées en tant que nervures sur les faces arrière des plaques de guidage (4, 5) s'étendent sur toute la longueur des plaques de guidage (4, 5).

8. Dispositif selon la revendication 6 ou 7, **caractérisé en ce que** des boutons sont formés sur les côtés des contre-saillies en forme de nervures (22, 23) prévues sur les consoles (12) qui, à l'état encliqueté, s'appuient contre les saillies en forme de nervures (18, 19) des plaques de guidage (4, 5).

9. Dispositif selon l'une quelconque des revendications 1 à 8, **caractérisé en ce que** les consoles (12) sont réalisées sous forme de pièces en plastique monobloc.

10. Dispositif selon la revendication 9, **caractérisé en ce que** les consoles (12) sont en PVC ou en PE.

11. Dispositif selon l'une quelconque des revendications 1 à 10, **caractérisé en ce que** les plaques de guidage (4, 5) sont également constituées de pièces monoblocs en PVC ou en PE.

12. Dispositif selon l'une quelconque des revendications 1 à 11, **caractérisé en ce que** les plaques de guidage (4, 5) et les consoles (12) sont extrudées ou moulées par injection.

13. Dispositif selon l'une quelconque des revendications 1 à 12, **caractérisé en ce que**
la traverse en U (13) et les deux branches en U (14, 15) de la console (12) sont chacune constituées de deux plaques (28, 29) s'étendant de manière espacée l'une de l'autre, qui sont reliées entre elles par des nervures (30) disposées en forme de treillis.

14. Dispositif selon l'une quelconque des revendications 1 à 13, **caractérisé en ce que**
des brides de fixation (31) en saillie sont prévues des deux côtés de la traverse en U (13) de la console (12), par l'intermédiaire desquelles la console (12) respective peut être reliée à la paroi porteuse à l'aide d'éléments de fixation.

15. Dispositif selon l'une quelconque des revendications 1 à 14, **caractérisé en ce que** des supports (32) pour des conduites à poser de manière fixe sont disposés sur la face extérieure des branches en U (14, 15) des consoles (12).
